# EUROPÄISCHE PATENTSCHRIFT

(11) **EP 4 537 644 B1**
(45) Veröffentlichungstag und Bekanntmachung des Hinweises auf die Patenterteilung: **26.11.2025**
(21) Anmeldenummer: 23203001.5
(22) Anmeldetag: 11.10.2023
(51) Int. Cl.: A01B 33/06, A01B 9/00, A01B 15/16, A01B 35/16

(54) **BODENBEARBEITUNGSGERÄT**
SOIL WORKING IMPLEMENT
APPAREIL DE TRAVAIL DU SOL

(43) Veröffentlichungstag der Anmeldung: 16.04.2025
(73) Patentinhaber: 4 Disc GmbH, 44329 Dortmund (DE)
(72) Erfinder: DREESBEIMDIEKE, Hermann, 33334 Gütersloh (DE)
(74) Vertreter: Hoefer & Partner Patentanwälte mbB

(56) Entgegenhaltungen:
- AT-B- 366 224
- AT-B- 387 884
- DE-A1- 102022 112 305
- DE-A1- 3 723 141
- RU-C1- 2 626 170
- US-A- 1 365 037

## Beschreibung

Die Erfindung betrifft ein Bodenbearbeitungsgerät zum Bearbeiten von Feldern. Insbesondere ist das Bodenbearbeitungsgerät zum ganzflächigen Abschneiden der Bodenoberfläche ausgebildet.

US 1 365 037 A zeigt ein Bodenbearbeitungsgerät nach dem Oberbegriff des Anspruchs 1 und betrifft eine Vorrichtung zum Schneiden von Unkraut und dergleichen sowie zum Auflockern der Oberseite des Bodens, wodurch eine kombinierte Unkraut- und Bodenbearbeitungsvorrichtung geschaffen wird. Die Vorrichtung umfasst eine Vielzahl von Scheiben, die horizontal angeordnet und drehbar auf einem Rahmen montiert sind, so dass sie sich bei Reibungskontakt in beide Richtungen drehen können.

AT 387 884 B bezieht sich auf ein Bodenlockerungsgerät, mit wenigstens einem in den Boden eindringenden Bodenlockerungswerkzeug zum Unterfahren und wendefreien Anheben der durch die Eindringtiefe bestimmten Bodenschicht, wobei ein geneigter Rotor das Lockerungswerkzeug bildet.

Weiteren Stand der Technik zeigen RU 2 626 170 C1, AT 366 224 B und DE 37 23 141 A1.

Im Zuge der Klimaveränderung selektieren sich auf den Feldern immer stärker Pflanzen heraus, die in den Ackerkulturen nicht willkommen sind. Oft versagen die selektiven Herbizide und es kommt zu Minderertrag und einer Ausbreitung des Samens und Wurzelpotentials. Ein weiteres Problem in der Feldwirtschaft besteht in der Regulierung und Kontrolle der Pflanzen, die nach der Ernte der Hauptkultur die Felder wieder begrünen, insbesondere durch ausgefallene Samen der vorherigen Hauptkultur oder andere Begleitkulturen. Dies wird in der Regel chemisch kontrolliert, wobei allerdings durch weitere Einschränkungen und nicht wieder zugelassene chemische Hilfsstoffe zunehmend die mechanische Unkrautregulierung von Interesse ist; zumal ein Großteil der Bevölkerung eine Reduktion der anorganischen Hilfsmittel befürwortet.

In der Vergangenheit wurde dieses Problem oft mit dem Wendepflug gelöst. Allerdings ist es in Feldlagen mit einem großen Erosionspotential durch Wind und/oder Wasser vorteilhaft, einen Teil der Ernterückstände auf dem Feld zu belassen, um so dem Oberboden mehr Halt zu geben und einen Abtrag zu reduzieren oder zu verhindern. Der Wendepflug allerdings arbeitet in der Regel sämtliche Ernterückstände vollständig in den Boden ein.

Es ist Aufgabe vorliegender Erfindung, ein Bodenbearbeitungsgerät anzugeben, das eine möglichst effiziente und umweltschonende Bearbeitung des Bodens, insbesondere zur Regulierung von unerwünschten Kulturen, auf einem Feld ermöglicht.

Die Lösung dieser Aufgabe erfolgt durch die Merkmale des unabhängigen Anspruchs. Die abhängigen Ansprüche haben vorteilhafte Ausgestaltungen der Erfindung zum Gegenstand.

Die Erfindung zeigt ein Bodenbearbeitungsgerät mit einem Rahmen. Der Rahmen ist zur Befestigung an einer Zugmaschine ausgebildet. Hierzu ist der Rahmen beispielsweise an der Dreipunktaufhängung der Zugmaschine befestigbar. Der Rahmen ist entlang einer Fahrtrichtung mittels die Zugmaschine ziehbar. Parallel zu dieser Fahrtrichtung ist eine horizontale Längsachse des Bodenbearbeitungsgeräts definiert. Senkrecht zu dieser Längsachse steht eine horizontale Querachse. Die Längsachse und die Querachse definieren somit die "Horizontale", auch als horizontale Ebene bezeichnet. Senkrecht zur Längsachse und senkrecht zur Querachse steht eine Hochachse des Bodenbearbeitungsgerätes. Entsprechend den Achsen werden auch Richtungsangaben verwendet, wie beispielsweise Längsrichtung, Querrichtung und Hochrichtung.

Der Rahmen erstreckt sich im Wesentlichen in einer durch die Längsachse und Querachse aufgespannten Ebene. An dem Rahmen sind mehrere Scheibeneinheiten angeordnet und über den Rahmen verteilt. Im Rahmen der Beschreibung vorliegender Erfindung wird stellenweise nur eine Scheibeneinheit bzw. die Ausbildung einer einzelnen Scheibeneinheit beschrieben. Dabei ist jedoch stets vorgesehen, dass mehrere der Scheibeneinheiten, insbesondere alle verwendeten Scheibeneinheiten, dementsprechend ausgebildet sind.

Jede Scheibeneinheit umfasst eine Scheibe; insbesondere ist pro Scheibeneinheit genau eine Scheibe vorgesehen. Die jeweilige Scheibeneinheit positioniert ihre zugehörige Scheibe unterhalb des Rahmens. Dabei ist die jeweilige Scheibe im Wesentlichen horizontal angeordnet, um so den Boden zu unterschneiden. "Unterschneiden" bedeutet, dass die Scheibe im Inneren des Bodens geführt wird und dadurch der Oberboden (die oberste Schicht des Bodens) bzw. darin wachsende Kulturen abschneiden kann. Die Bezeichnung "im Wesentlichen horizontal" bedeutet insbesondere, dass die Scheibe mit einem Anstellwinkel α von 0° bis 15° zur Horizontalen angestellt sein kann. Es versteht sich, dass die im Wesentlichen horizontale Ausrichtung der Scheiben bzw. der definierte Anstellwinkel sich auf einen Arbeitszustand des beschriebenen Bodenbearbeitungsgerätes bezieht, bei dem das Bodenbearbeitungsgerät mittels der Zugmaschine über das Feld gezogen wird.

Die jeweilige Scheibe weist vorzugsweise eine vollumfängliche Schneide auf. Insbesondere handelt es sich um eine glatte Schneide ohne Kerben oder Wellen.

Das erfindungsgemäße Bodenbearbeitungsgerät ermöglicht es, den Aufwuchs nach der Ernte zu bearbeiten und gesichert auszuschalten, indem der gesamte Oberboden beispielsweise in einer Tiefe von 2 bis 3 cm abgeschnitten wird. Dadurch können die Pflanzenmaterialien auf der Oberfläche bleiben und austrocknen, wodurch ein Wiederanwachsen vermieden wird. Ein weiterer Vorteil bei der Bearbeitung mit dem erfindungsgemäßen Bodenbearbeitungsgerät ist die Konservierung des Bodenwassers, da der kapillare Aufstieg des Wassers durch den lockeren Oberboden unterbrochen wird.

Bevorzugt ist vorgesehen, dass die jeweilige Scheibe mit dem Anstellwinkel in Fahrtrichtung geneigt ist. Hierzu ist der Anstellwinkel größer als 0°. Eine Neigung in Fahrtrichtung bedeutet, dass ein in Fahrtrichtung vorne liegender Bereich der Scheibe tiefer liegt als eine in Fahrtrichtung hinten liegender Bereich der Scheibe. Dadurch wirkt auf die Scheibe grundsätzlich ein Druck, der die Scheibe im Boden hält und nicht nach oben herausdrückt.

Des Weiteren ist bevorzugt vorgesehen, dass der Anstellwinkel zwischen einer Untergrenze und einer Obergrenze gewählt wird. Die Untergrenze des Anstellwinkels beträgt vorzugsweise 3°, besonders vorzugsweise 4°. Zusätzlich oder alternativ kann die Obergrenze bei vorzugsweise 12°, besonders vorzugsweise 10°, liegen. Es hat sich gezeigt, dass ein Anstellwinkel, insbesondere mit Neigung in Fahrtrichtung, innerhalb dieser Grenzen zu einem gut funktionierenden Unterschneiden des Bodens geeignet ist.

Bevorzugt ist vorgesehen, dass bei einer Betrachtung parallel zur Hochachse, also bei einer Betrachtung von oben oder von unten, sich die Scheiben mehrerer Scheibeneinheiten, vorzugsweise die Scheiben aller Scheibeneinheiten, nicht überlappen. Vielmehr ist bevorzugt vorgesehen, dass die Scheiben bezüglich der Betrachtung parallel zur Hochachse (und somit in der horizontalen Ebene) voneinander beabstandet sind. Hierzu weisen die Scheiben zueinander vorzugsweise einen definierten Abstand auf. Dieser Abstand zwischen den Scheiben ist der kürzeste Abstand zwischen zwei nebeneinanderliegenden Scheiben und wird zwischen den Scheibenrändern bzw. den Schneideflächen der Scheiben gemessen.

Die Scheiben weisen einen bestimmten Durchmesser auf. Vorzugsweise weisen alle Scheiben denselben Durchmesser auf. Sollten Scheiben mit unterschiedlichen Durchmessern eingesetzt werden, so ist die Scheibe mit kleinstem Durchmesser für folgende Definition ausschlaggebend: Der Abstand zwischen den Scheiben beträgt vorzugsweise zumindest 5% des Scheibendurchmessers. Die Scheiben sind also bei der Betrachtung parallel zur Hochachse deutlich voneinander beabstandet.

Bei einer Betrachtung parallel zur Längsachse, also bei einer Betrachtung des Bodenbearbeitungsgerätes von hinten in Fahrtrichtung oder von vorne entgegen der Fahrtrichtung, ist bevorzugt vorgesehen, dass die Scheiben mehrerer Scheibeneinheiten, insbesondere die Scheiben aller Scheibeneinheiten, aneinandergrenzen oder sich überlappen. Dadurch ist sichergestellt, dass das Bodenbearbeitungsgerät über seine gesamte Arbeitsbreite lückenlos den Boden durchtrennt.

Vorzugsweise sind die Scheibeneinheiten und somit auch die Scheiben versetzt zueinander angeordnet, so dass bei Betrachtung entlang der Längsachse keine zwei Scheibeneinheiten und somit auch keine zwei Scheiben zueinander fluchtend angeordnet sind. Dadurch kann Pflanzen- und Bodenmaterial nahezu ungehindert das Gerät passieren und bleibt möglichst wenig an den Scheibeneinheiten hängen.

Besonders bevorzugt ist vorgesehen, dass das Bodenbearbeitungsgerät zumindest zwei Reihen umfasst, die entlang der Längsachse hintereinander angeordnet sind. In jeder Reihe befinden sich zumindest zwei der Scheibeneinheiten. Besonders bevorzugt weist das Bodenbearbeitungsgerät zumindest drei oder zumindest vier dieser Reihen auf. Des Weiteren ist besonders bevorzugt vorgesehen, dass in jeder Reihe mehr als zwei, besonders vorzugsweise zumindest drei oder zumindest vier, der Scheibeneinheiten angeordnet sind.

Erfindungsgemäß werden für das Abschneiden keine Gänsefußscharen verwendet, sondern die beschriebenen Scheiben. Die Scharen haben nämlich den Nachteil, dass sie im Boden stillstehen und einen nahezu waagerechten Schnitt erzeugen, wobei die Schare versetzt angeordnet sein müssen und sich überschneiden, so dass es je nach Position in dem Gerät durch Abschattungen der vorlaufenden Schar zu unterschiedlichem Verschleiß an einzelnen Scharen kommen kann. Dies kann im Rahmen der Erfindung dadurch vermieden werden, dass die Scheiben vorzugsweise gedreht werden. Dadurch ergibt sich ein sehr gleichmäßiger Verschleiß an den Scheiben.

Deshalb ist erfindungsgemäß vorgesehen, dass die Scheiben drehbeweglich antreibbar sind. Hierzu ist insbesondere ein Motor, vorzugsweise Druckmittelmotor, vorgesehen, der die Scheiben dreht. Die Scheiben werden somit während der Benutzung des Bodenbearbeitungsgerätes aktiv in Rotation versetzt. Der Boden wird dadurch aktiv auch in anderen Richtungen als die Fahrtrichtung geschnitten, wodurch sich die benötigte Zugkraft zum Ziehen des Bodenbearbeitungsgerätes reduziert und ein sehr gleichmäßiger Verschleiß der Scheiben einstellt.

Vorzugsweise ist vorgesehen, dass die mehreren Scheiben der Scheibeneinheiten in unterschiedliche Richtungen gedreht werden, insbesondere wechseln sich Scheiben, die entlang der Querachse nebeneinanderliegen, in ihrer Drehrichtung ab. So wird beispielsweise entlang der Querachse die erste Scheibe links und die nächstfolgende Scheibe rechts gedreht.

Das Bodenbearbeitungsgerät umfasst vorzugsweise eine Verstelleinrichtung, die es ermöglicht, die Drehrichtung der Scheiben zu verändern. Bei den Motoren handelt es sich beispielsweise um Druckmittelmotoren, also hydraulisch oder pneumatisch angetriebene Motoren. Die Verstelleinrichtung ist beispielsweise eine entsprechende Anordnung, um die Richtung des Druckmittels zu bzw. von den Motoren zu ändern, so dass sich die Drehrichtung ändert. Auch dadurch kann der Verschleiß der Scheiben sehr gleichmäßig erfolgen.

Die genaue konstruktive Ausgestaltung der einzelnen Scheibeneinheit sieht erfindungsgemäß vor, dass die jeweilige Scheibeneinheit eine Antriebseinheit umfasst. Zusätzlich zur Antriebseinheit ist eine drehbare Welle vorgesehen. Die drehbare Welle ist in der Antriebseinheit drehbar gelagert. Am unteren Ende der Welle ist die jeweilige Scheibe angeordnet. Durch Drehen der Welle wird somit die Scheibe in Rotation versetzt.

Die Antriebseinheit ist am Rahmen, insbesondere an einen jeweiligen Querträger des Rahmens, befestigt. Die Antriebseinheit kann grundsätzlich nur aus dem Motor bestehen und somit nicht nur zum Antrieb, sondern auch zur Lagerung der Welle ausgebildet sein. Bevorzugt ist jedoch vorgesehen, dass die Antriebseinheit ein Gehäuse umfasst, in dem die Lagerung der Welle ausgebildet ist. Der Motor ist dabei am Gehäuse befestigt.

Vorzugsweise ist der Motor über eine Kupplung mit der Welle verbunden. Dabei handelt es sich vorzugsweise um eine Kettenkupplung mit zwei koaxialen, gleich großen Kettenrädern und einer Duplex-Kette.

Vorzugsweise ist die Antriebseinheit derart am Rahmen befestigt, so dass der Anstellwinkel der Scheiben fest eingestellt ist und sich grundsätzlich während der Benutzung des Bodenbearbeitungsgerätes nicht ändert.

Allerdings ist bevorzugt vorgesehen, dass die Scheibe beispielsweise bei Kontakt mit einem großen Stein, ausweichen kann. Hierzu ist insbesondere vorgesehen, dass die Antriebseinheit um eine parallel zur Querachse liegende erste Schwenkachse und/oder um eine parallel zu Hochachse liegende zweite Schwenkachse schwenkbar am Rahmen, insbesondere an einer mit dem Rahmen verbundenen Halterung, befestigt ist. Wie noch erklärt wird, kann es sich bei der/den Schwenkachse(n) (i) um eine starre Achse in Form einer Welle oder eines Bolzen handeln oder (ii) um eine "imaginäre" Schwenkachse, die durch zwei aufeinanderliegende Gleitelemente entsteht.

Die erste Schwenkachse ist als parallel zur Querachse definiert, da im Wesentlichen ein Schwenken nach oben bzw. unten erfolgen soll, um z.B. einem großen Stein auszuweichen. Da für diesen Zweck aber auch eine leicht schräge Schwenkbewegung möglich ist, ist im Rahmen dieser Erfindung vorzugsweise eine Abweichung der ersten Schwenkachse um bis zu +/- 20°, vorzugsweise bis zu +/- 10°, von der Querachse vorgesehen.

Die optionale zweite Schwenkachse ist als parallel zur Hochachse definiert, da mit dieser Schwenkbewegung im Wesentlichen ein Schwenken nach links bzw. rechts erfolgen soll, um z.B. einem großen Stein auszuweichen. Da für diesen Zweck aber auch eine leicht schräge Schwenkbewegung möglich ist, ist im Rahmen dieser Erfindung vorzugsweise eine Abweichung der ersten Schwenkachse um bis zu +/- 35°, vorzugsweise bis zu +/- 20°, von der Hochachse vorgesehen.

Des Weiteren ist bevorzugt zumindest eine Federeinheit, insbesondere mit Spiraldruckfeder, vorgesehen. Die Antriebseinheit ist dabei samt Welle und Scheibe entgegen der Federkraft dieser zumindest einen Federeinheit um die zumindest eine Schwenkachse schwenkbar. Die Federeinheit ist insbesondere so stark ausgelegt, dass sich die Antriebseinheit bei der normalen Benutzung des Bodenbearbeitungsgerätes nicht oder nur minimal um die zumindest eine Schwenkachse bewegt. Erst bei Kontakt bei einem relativ großen Stein kann die einzelne Antriebseinheit gegen die Kraft der Feder verschwenkt werden und somit nach hinten und oben und/oder zur Seite ausweichen.

Besonders bevorzugt befindet sich die zumindest eine Schwenkachse hinter dem zugehörigen Querträger des Rahmens.

### Erste Variante:

Bei der ersten Variante ist die erste Schwenkachse durch eine starre Achse gebildet, beispielsweise durch eine Welle oder einen Bolzen. Auf die zweite Schwenkachse wird bei dieser Variante vorzugsweise verzichtet.

Insbesondere ist die erste Schwenkachse bei der ersten Variante unterhalb des Querträgers angeordnet. Die zugehörige Federeinheit ist dabei vorzugsweise über dem Querträger angeordnet.

### Zweite Variante:

Bei der zweiten Variante werden die beiden Schwenkachsen als imaginären Achsen beschrieben, da keine Wellen oder Bolzen die Achsen bilden. Bei dieser Variante weist das Gehäuse der Antriebseinheit ein Gehäusegleitelement auf. Am Rahmen, insbesondere am Querträger, befindet sich eine Halterung mit einem Halterungsgleitelement. Das Gehäusegleitelement liegt auf dem Halterungsgleitelement auf.

Gehäusegleitelement und Halterungsgleitelement sind vorzugsweise plattenförmig. Gehäusegleitelement und Halterungsgleitelement stehen vorzugsweise mit bis zu +/- 30° vertikal. Gehäusegleitelement und Halterungsgleitelement berühren sich vorzugsweise direkt.

Vorzugsweise umfasst das Gehäuse einen Lagerkörper zur Aufnahme der Welle, das Gehäusegleitelement und zwei gegenüberliegende Schenkel. Die beiden Schenkel verbinden dabei das Gehäusegleitelement mit dem Lagerkörper. Vorzugsweise sind die beiden Schenkel mit dem Gehäusegleitelement einstückig gefertigt; insbesondere durch ein U-förmig gebogenes Blech oder durch ein Gussteil.

Insbesondere ist vorgesehen, dass das Gehäusegleitelement und das Halterungsgleitelement lediglich über die zumindest eine Federeinheit - vorzugsweise genau zwei dieser Federeinheiten - aneinander befestigt sind, sodass das Gehäusegleitelement für eine Schwenkbewegung stellenweise entgegen der Federkraft vom Halterungsgleitelement abhebbar ist. Durch dieses stellenweise Abheben entgegen der Federkraft ist grundsätzlich eine Schwenkbewegung zwischen Gehäusegleitelement und Halterungsgleitelement um jede beliebige Achse, also auch um die erwähnten beiden Schwenkachsen, möglich.

Vorzugsweise ist vorgesehen, dass das Gehäusegleitelement mit zumindest einer konvexen Rundung an zumindest einer konkaven Rundung des Halterungsgleitelements anliegt und somit bei der Schwenkbewegung geführt ist. Dadurch ist es möglich, beim Abheben des Gehäusegleitelements vom Halterungsgleitelement die Schwenkbewegung um eine Schwenkachse mit definierter Ausrichtung zu führen. Insbesondere wird dies für die erste Schwenkachse, also für die Bewegung nach oben/unten bzw. für das Ausweichen nach hintern genutzt. Hierzu ist bevorzugt vorgesehen, dass das Gehäusegleitelement oben eine erste konvexe Rundung aufweist, die in einer ersten konkaven Rundung des Halterungsgleitelements gleitet. Zusätzlich kann das Gehäusegleitelement unten eine zweite konvexe Rundung aufweisen, die in einer zweiten konkaven Rundung des Halterungsgleitelements gleitet.

Die erste konvexe Rundung ergibt sich vorzugsweise durch den Übergang des Gehäusegleitelements in den ersten Schenkel des Gehäuses. Die zweite konvexe Rundung ergibt sich vorzugsweise durch den Übergang des Gehäusegleitelements in den zweiten Schenkel des Gehäuses.

Die jeweilige Federeinheit umfasst vorzugsweise einen Federbolzen, der durch die Halterung, insbesondere das Halterungsgleitelement, und durch das Gehäuse, insbesondere das Gehäusegleitelement, ragt. Vorzugsweise sind dabei in der Halterung und/oder im Gehäuse entsprechend große Löcher vorgesehen, durch die der Federbolzen ragt, sodass der Federbolzen beim Abheben des Gehäusegleitelements vom Halterungsgleitelement nicht an den Rändern der Löcher anschlägt. Zusätzlich oder alternativ kann der Federbolzen auch schwenkbar angeordnet sein.

Auf dem Federbolzen sitzt die Feder der Federeinheit. Vorzugsweise ist vorgesehen, dass die Feder einerends gegen den Federbolzen abgestützt ist. Hierzu kann sich am Federbolzen z.B. ein Absatz, eine Scheibe oder eine entsprechend große Mutter befinden, gegen den/die sich die Feder stützt. Der Federbolzen und somit die gesamte Federeinheit ist an diesem Ende vorzugsweise freikragend.

Andererends stützt sich die Feder entweder gegen das Gehäuse, insbesondere wenn die Federeinheit sich freikragend in Richtung des Gehäuses erstreckt. Oder gegen die Halterung, insbesondere wenn die Federeinheit sich freikragend in Richtung der Halterung erstreckt.

Vorzugsweise umfasst das Bodenbearbeitungsgerät eine untere Begrenzung, insbesondere ausgebildet als Anschlag, um das Verschwenken um die erste Schwenkachse, insbesondere bei einer Bewegung der Scheibe nach vorne, zu begrenzen. Vorzugsweise befindet sich die untere Begrenzung am Halterungsgleitelement und ist so angeordnet, dass das Gehäuse daran anschlägt. Vorzugsweise ermöglicht die untere Begrenzung ein Verschwenken aus der Neutralstellung um bis zu 20°, vorzugsweise bis zu 15°.

Vorzugsweise umfasst das Bodenbearbeitungsgerät zwei seitliche Begrenzung, insbesondere ausgebildet als Anschlag, um das Verschwenken um die zweite Schwenkachse, insbesondere bei einer Bewegung der Scheibe nach links oder rechts, zu begrenzen. Vorzugsweise befinden sich die seitlichen Begrenzung am Halterungsgleitelement und sind so angeordnet, dass das Gehäuse daran anschlägt. Vorzugsweise ermöglichen die seitlichen Begrenzung ein Verschwenken aus der Neutralstellung um bis zu 20°, vorzugsweise bis zu 15°, nach links und/oder aus der Neutralstellung um bis zu 20°, vorzugsweise bis zu 15°, nach rechts.

Hinter den Scheibeneinheiten kann das Bodenbearbeitungsgerät eine oder mehrere Reihen mit Striegeln aufweisen.

Des Weiteren kann das Bodenbearbeitungsgerät zumindest ein Rad, vorzugsweise mehrere Räder, aufweisen. Die Räder sind vorzugsweise über eine Höhenverstellung mit dem Rahmen verbunden. Die Räder sind insbesondere zum Führen des Bodenbearbeitungsgerätes über das Feld vorgesehen und bestimmen somit die Tiefe der Scheiben im Boden.

Bei entsprechend großer Arbeitsbreite kann der Rahmen einklappbar ausgebildet sein, so dass ein oder zwei Seitenflügel des Rahmens für den Straßentransport hochgeklappt werden können.

Weitere Einzelheiten, Vorteile und Merkmale der vorliegenden Erfindung ergeben sich aus nachfolgender Beschreibung eines Ausführungsbeispiels anhand der Zeichnung. Dabei zeigt:
- Fig. 1: eine perspektivische Darstellung eines erfindungsgemäßen Bodenbearbeitungsgerätes gemäß einem Ausführungsbeispiel,
- Fig. 2: eine Ansicht von unten des erfindungsgemäßen Bodenbearbeitungsgerätes gemäß dem Ausführungsbeispiel,
- Fig. 3: eine Detailansicht zu Fig. 2,
- Fig. 4: eine seitliche Ansicht einer Scheibeneinheit gemäß erster Variante des erfindungsgemäßen Bodenbearbeitungsgerätes gemäß dem Ausführungsbeispiel,
- Fig. 5: eine perspektivische Ansicht der Scheibeneinheit gemäß erster Variante aus Fig. 4,
- Fig. 6: eine perspektivische Ansicht der Scheibeneinheit gemäß zweiter Variante des erfindungsgemäßen Bodenbearbeitungsgerätes gemäß dem Ausführungsbeispiel,
- Fig. 7/8: seitliche Ansichten der Scheibeneinheit gemäß zweiter Variante des erfindungsgemäßen Bodenbearbeitungsgerätes gemäß dem Ausführungsbeispiel,
- Fig. 9: den in Fig. 8 gekennzeichnete Schnitt G-GA-A,
- Fig. 10: den in Fig. 7 gekennzeichnete Schnitt H-H,
- Fig. 11: ein Detail der Scheibeneinheit gemäß zweiter Variante, verschenkt um die erste Schwenkachse,
- Fig. 12: ein Detail der Scheibeneinheit gemäß zweiter Variante, verschenkt um die erste Schwenkachse, und
- Fig. 13: ein Detail der Scheibeneinheit gemäß zweiter Variante, verschenkt nach um die zweite Schwenkachse.

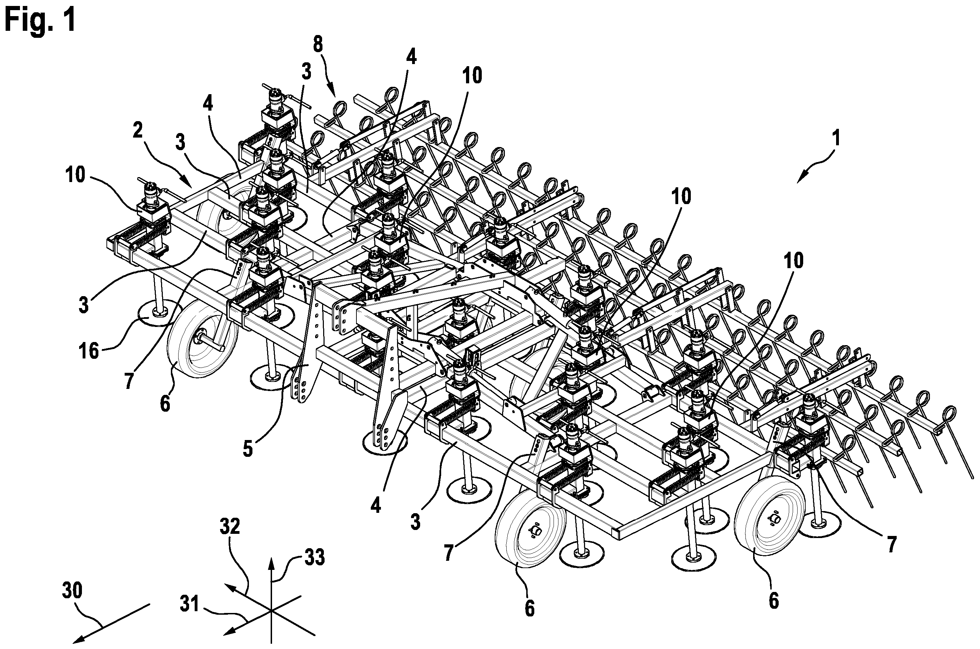

Im Folgenden wird anhand der Fig. 1 bis 13 ein Bodenbearbeitungsgerät 1 gemäß einem Ausführungsbeispiel beschrieben. Dabei wird, soweit nicht explizit anders erwähnt, stets auf alle Figuren Bezug genommen.

Das Bodenbearbeitungsgerät 1 ist zum Ziehen über ein Feld entlang einer Fahrtrichtung 30 ausgebildet. Parallel zur Fahrtrichtung 30 erstreckt sich eine horizontale Längsachse 31. Senkrecht zur Längsachse 31 steht eine horizontale Querachse 32. Senkrecht zur Längsachse 31 und zur Querachse 32 steht eine Hochachse 33.

Das Bodenbearbeitungsgerät 1 umfasst einen Rahmen 2, der aus mehreren Querträgern 3 und mehreren Längsträgern 4 gebildet ist. Die Querträger 3 erstrecken sich entlang der Querachse 32. Die Längsträger 4 erstrecken sich entlang der Längsachse 31.

Am vorderen Ende des Rahmens 2 befindet sich eine Zugmaschinenanbindung 5 zur Befestigung des Bodenbearbeitungsgerätes 1 an einer Zugmaschine. Über mehrere Räder 6 wird der Rahmen 2 gegenüber dem Boden abgestützt. Die Räder 6 sind jeweils über eine Höhenverstellung 7 mit dem Rahmen 2 verbunden.

Am hinteren Ende weist das Bodenbearbeitungsgerätes 1 drei Striegelreihen 8 auf.

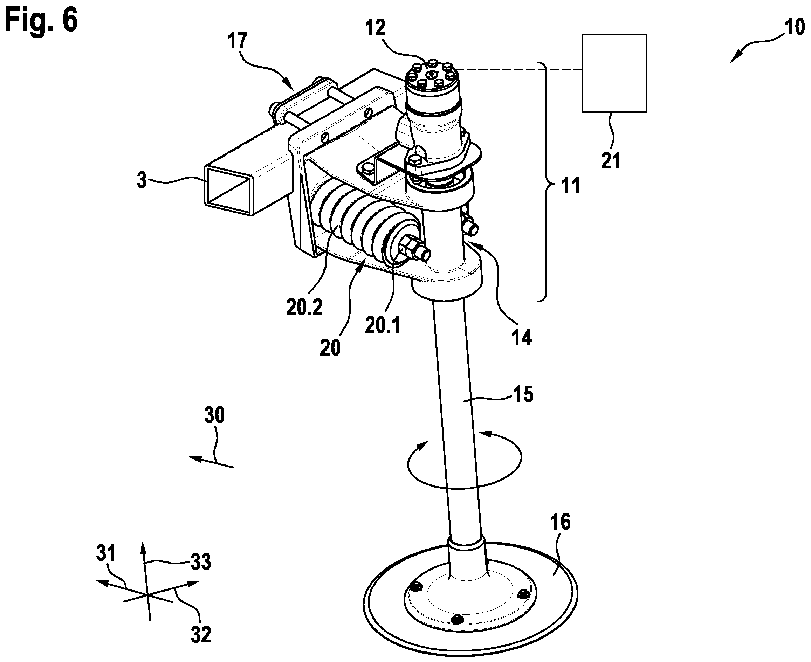

Das Bodenbearbeitungsgerät 1 umfasst mehrere Scheibeneinheiten 10, die im gezeigten Ausführungsbeispielen an den Querträgern 3 befestigt sind. Figuren 1 bis 3 zeigen der Einfachheit halber Scheibeneinheiten 10 gemäß der ersten Variante, wobei zu verstehen ist, dass an den selben Positionen auch, vorzugsweise ausschließlich, Scheibeneinheit 10 der zweiten Variante gemäß Figuren 6 ff verwendet werden können. Sämtliche Ausführungen gelten, soweit nicht explizit anders erklärt, für die Scheibeneinheiten 10 beider Varianten.

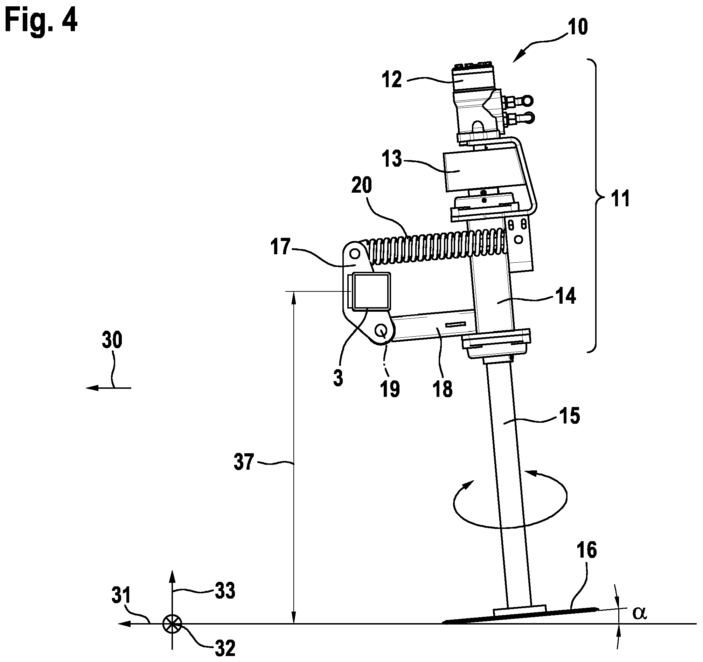

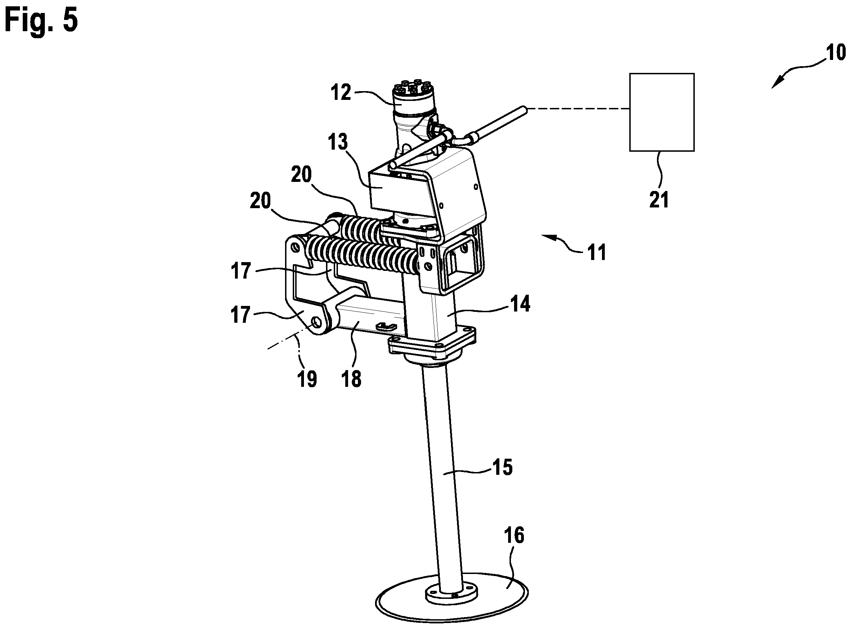

Wie insbesondere die Fig. 4 und 5 zeigen, umfasst jede Scheibeneinheit 10 eine Antriebseinheit 11. Die Antriebseinheit 11 wiederum setzt sich zusammen aus einem Gehäuse 14 und einem aufgesetzten Motor 12, hier ausgebildet als Druckmittelmotor. In dem Gehäuse 14 ist eine Welle 15 drehbeweglich gelagert, die von der Antriebseinheit 11 nach unten ragt.

Die Welle 15 ist über eine nur schematisch dargestellte, optionale Kupplung 13 mit dem Motor 12 verbunden. Bei dieser Kupplung 13 handelt es sich um eine Kettenkupplung mit zwei koaxialen, gleich großen Kettenrädern und einer darauf geführten Duplex-Kette.

Am unteren Ende der Welle 15 ist eine Scheibe 16 befestigt, die sich zusammen mit der Welle 15 dreht.

Fig. 4 zeigt zusätzlich zu der Scheibeneinheit 10 auch den Querträger 3, an dem die Scheibeneinheit 10 befestigt ist. In Fig. 5 ist der Übersichtlichkeit halber der Querträger 3 ausgeblendet. Fig. 4 zeigt die genaue Lage der Scheibeneinheit 10 und somit der Scheibe 16 relativ zur Horizontalen. Die Horizontale ist durch die Längsachse 31 und die Querachse 32 aufgespannt. Zu sehen ist in Fig. 4, dass die Scheibe 16 mit einem Anstellwinkel α in Fahrtrichtung 30 angestellt ist, so dass ein in Fahrtrichtung 30 vorne liegender Bereich der Scheibe 16 tiefer liegt als ein in Fahrtrichtung 30 hinten liegender Bereich der Scheibe 16.

Fig. 4 und 5 verdeutlichen ferner, dass die Antriebseinheit 11, insbesondere das Gehäuse 14, in der ersten Variante über einen Arm 18 mit einer Halterung 17 verbunden ist. Die Halterung 17 befindet sich fest am Querträger 3. Die Verbindung zwischen Halterung 17 und Arm 18 ist durch eine starre erste Schwenkachse 19 gebildet. Die erste Schwenkachse 19 steht parallel zur Querachse 32. Dadurch ist die Antriebseinheit 11 um die erste Schwenkachse 19 relativ zum Rahmen 2 schwenkbar. Diese Schwenkbewegung erfolgt entgegen der Kraft zweier Federn einer Federeinheit 20. Die beiden Federeinheiten 20 verbinden hierzu ebenfalls die Antriebseinheit 11, insbesondere das Gehäuse 14, mit der Halterung 17.

Fig. 4 zeigt die Scheibeneinheit 10 in der normalen Arbeitsposition mit dem Anstellwinkel α. Selbiger Anstellwinkel ist auch bei den Scheibeneinheiten 10 der zweiten Variante vorgesehen. Bei einem Kontakt der Scheibe 16 oder Welle 15 mit einem entsprechend großen Stein kann die Antriebseinheit 11 um die Schwenkachse 19 nach hinten ausweichen, wobei dies entgegen der Kraft der beiden Federeinheiten 20 erfolgt.

Wie beschrieben, ist die Welle 15 und somit auch die Scheibe 16 mittels des Motors 12 drehbar. Fig. 5 verdeutlicht, dass der Druckmittelanschluss des Motors 12 mit einer rein schematisch dargestellten Verstelleinrichtung 21 verbunden sein kann. Diese Verstelleinrichtung 21 ermöglicht es, die Drehrichtung der Motoren 12 der mehreren Scheibeneinheiten 10 zu ändern, so dass nach einer gewissen Zeit die Drehrichtung umgekehrt werden kann, um einen möglichst gleichmäßigen Verschleiß der Scheiben 16 zu erreichen.

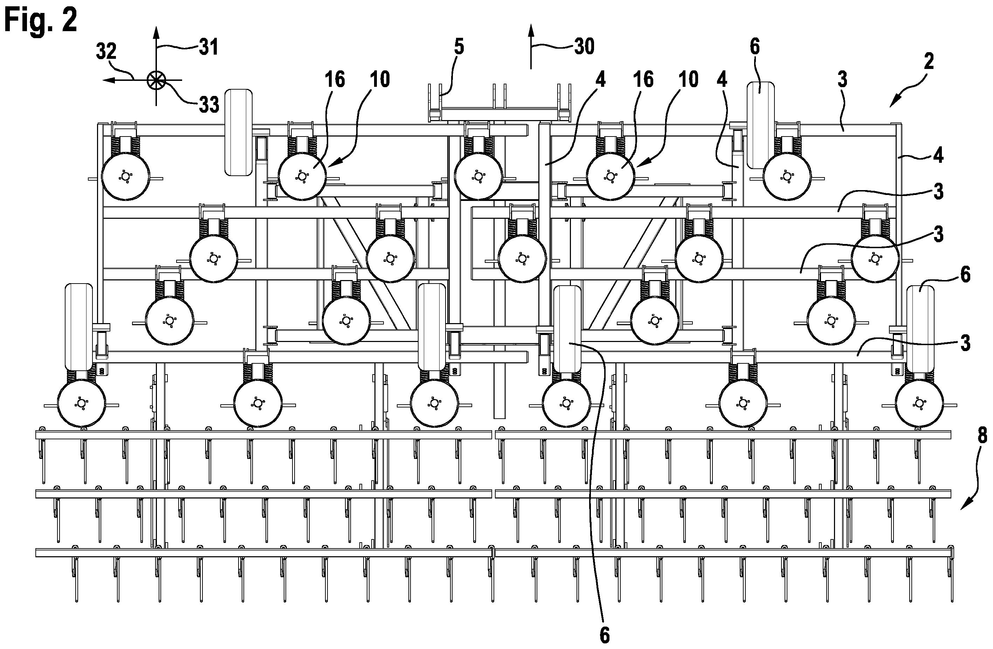

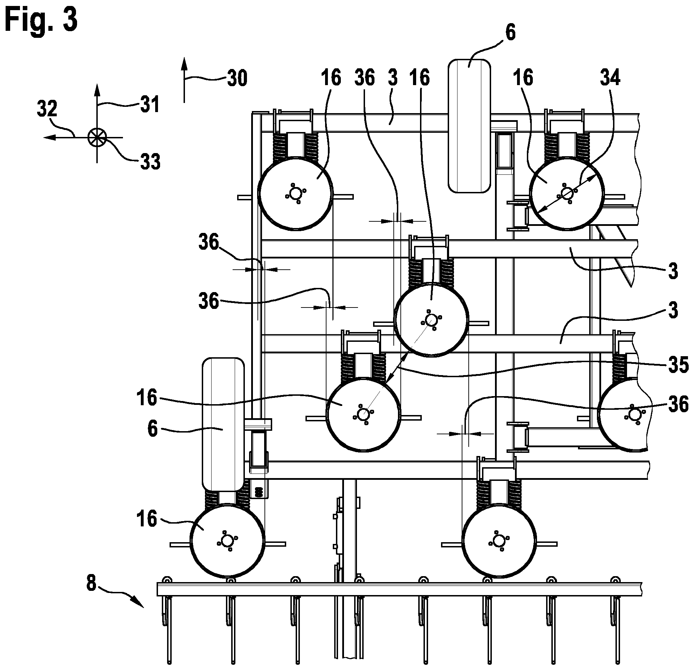

Fig. 2 zeigt das Bodenbearbeitungsgerät 1 von unten. Fig. 3 zeigt hierzu eine Detailansicht. Gemäß diesen beiden Figuren sind die Scheiben 16 bei einer Betrachtung parallel zur Hochachse 33 nicht überlappend, sondern mit einem Abstand 35 angeordnet.

Darüber hinaus zeigen die Fig. 2 und 3 auch, dass die Scheiben 16 bei einer Betrachtung parallel zur Längsachse 31 mit einer Überlappung 36 angeordnet sind. Durch diese Überlappung 36 wird sichergestellt, dass der Boden über die gesamte Arbeitsbreite des Bodenbearbeitungsgerätes 1 lückenlos abgeschnitten wird.

Des Weiteren ist in den Fig. 2 und 3 ein Durchmesser 34 der jeweiligen Scheibe 16 eingezeichnet. Vorzugsweise weisen alle Scheiben 16 denselben Durchmesser 34 auf.

Fig. 4 verdeutlicht eine Höhe 37, die von der Mitte des Querträgers 3 bis zum unteren Punkt der Scheibe 16 gemessen ist. Diese Höhe 37 beträgt, unabhängig vom hier genau gezeigten Ausführungsbeispiel, vorzugsweise zwischen 30 cm und 200 cm.

Fig. 2 und 3 verdeutlichen des Weiteren, dass die Scheibeneinheiten 10 und somit die Scheiben 16 allesamt versetzt zueinander angeordnet sind, so dass entlang der Längsachse 31 keine zwei Scheibeneinheiten 10 direkt hintereinander fluchtend angeordnet sind. Dadurch können Bodenmaterial und Pflanzenreste relativ ungehindert von den Wellen 15 durch das Bodenbearbeitungsgerät 1 hindurchlaufen.

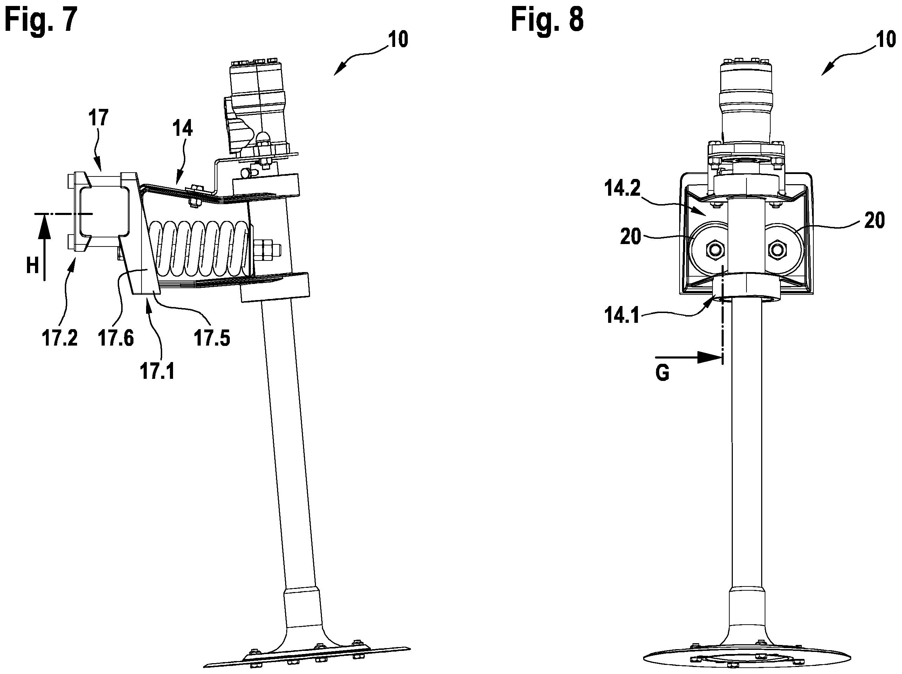

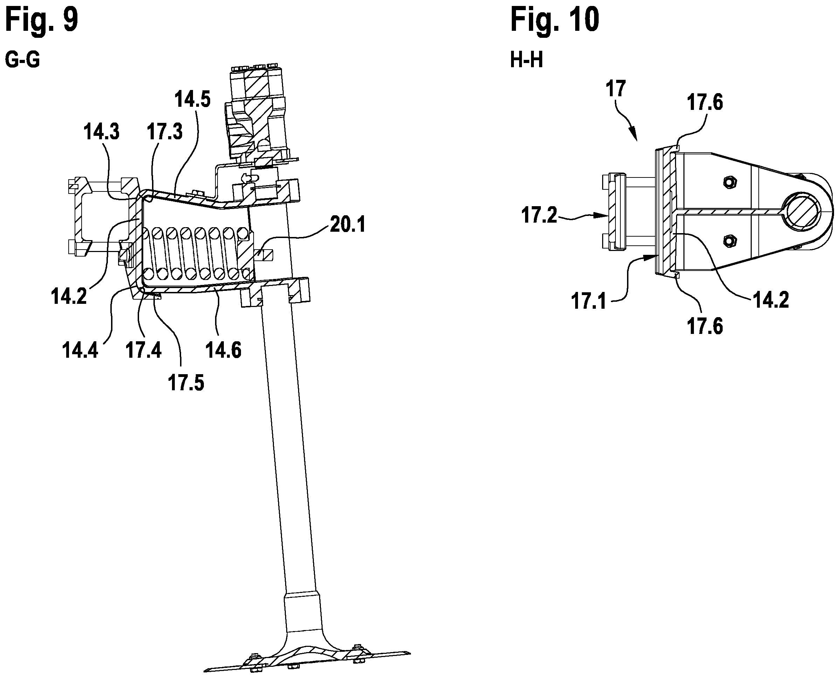

Fig. 6 ff zeigen die Scheibeneinheit 10 gemäß der zweiten Variante, wobei nur auf die Unterschiede gegenüber der ersten Variante eingegangen wird. Fig. 7 und 8 zeigen Seitenansichten in denen Schnitte H-H und G-G markiert sind. Die Ansichten der Schnitte zeigen die Fig. 9 und 10.

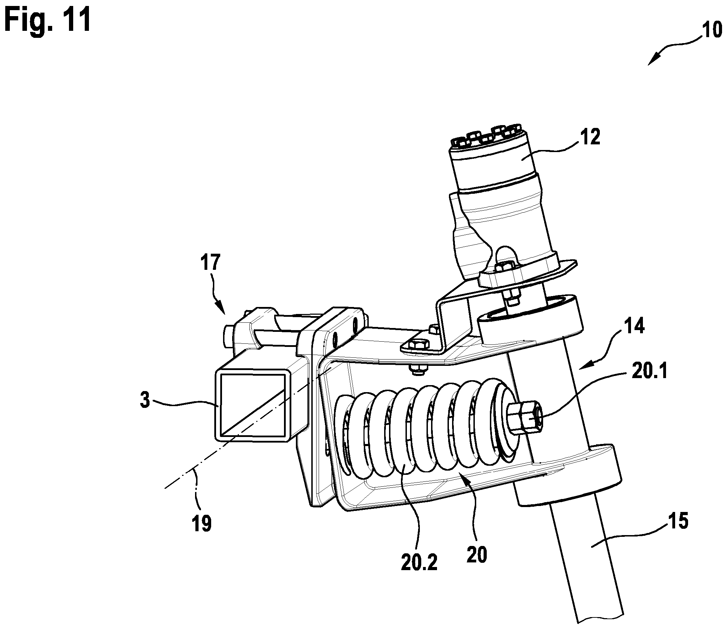

Bei der zweiten Variante ist zusätzlich zumindest eine zweite Schwenkachse 19.1 (siehe Fig. 11) vorgesehen, wie im allgemeinen Teil der Beschreibung definiert. In dieser Variante sind die beiden Schwenkachsen 19, 19.1 als imaginären Achsen beschrieben, da keine Wellen oder Bolzen die Achsen bilden. Bei dieser Variante weist das Gehäuse 14 der Antriebseinheit 11 ein Gehäusegleitelement 14.2 auf. Am Rahmen 2, insbesondere am Querträger 3, befindet sich die Halterung 17 mit einem Halterungsgleitelement 17.1. Das Gehäusegleitelement 14.2 liegt auf dem Halterungsgleitelement 17.1 auf. Mittels eines Gegenstücks 17.2 ist das Halterungsgleitelement 17.1 mit dem Rahmen 2 verbunden, insbesondere verschraubt.

Gehäusegleitelement 14.2 und Halterungsgleitelement 17.1 sind plattenförmig; ggf mit einer leichten Wölbung. Gehäusegleitelement 14.2 und Halterungsgleitelement 17.1 stehen mit bis zu +/- 30° vertikal. Gehäusegleitelement 14.2 und Halterungsgleitelement 17.1 berühren sich direkt.

Das Gehäuse 14 umfasst den Lagerkörper 14.1 zur Aufnahme der Welle 15, das Gehäusegleitelement 14.2 und zwei gegenüberliegende Schenkel 14.5, 14.6. Die beiden Schenkel 14.5, 14.6 verbinden dabei das Gehäusegleitelement 14.2 mit dem Lagerkörper 14.1. Die beiden Schenkel 14.5, 14.6 sind mit dem Gehäusegleitelement 14.2 einstückig gefertigt.

Das Gehäusegleitelement 14.2 und das Halterungsgleitelement 17.1 sind lediglich über zwei Federeinheiten 20 aneinander befestigt, sodass das Gehäusegleitelement 14.2 für eine Schwenkbewegung stellenweise entgegen der Federkraft vom Halterungsgleitelement 17.1 abheben kann. Durch dieses stellenweise Abheben entgegen der Federkraft ist grundsätzlich eine Schwenkbewegung zwischen Gehäusegleitelement 14.2 und Halterungsgleitelement 17.1 um jede beliebige Achse, also auch um die erwähnten beiden Schwenkachsen 19, 19.1, möglich.

Wie insbesondere Fig. 7 und 8 zeigen, ist vorgesehen, dass das Gehäusegleitelement 14.2 oben eine erste konvexe Rundung 14.3 aufweist, die in einer ersten konkaven Rundung 17.3 des Halterungsgleitelements 17.1 gleitet. Zusätzlich weist das Gehäusegleitelement 14.2 unten eine zweite konvexe Rundung 14.4 auf, die in einer zweiten konkaven Rundung 17.4 des Halterungsgleitelements 17.1 gleitet.

Die erste konvexe Rundung 14.3 ergibt sich durch den Übergang des Gehäusegleitelements 14.2 in den ersten Schenkel 14.5 des Gehäuses 14. Die zweite konvexe Rundung 14.4 ergibt sich durch den Übergang des Gehäusegleitelements 14.2 in den zweiten Schenkel 14.6 des Gehäuses 14.

Die jeweilige Federeinheit 20 umfasst einen Federbolzen 20.1, der durch die Halterung 17, hier das Halterungsgleitelement 17.1, und durch das Gehäuse 14, hier das Gehäusegleitelement 14.2, ragt.

Auf dem Federbolzen 20.1 sitzt die Feder 20.2 der Federeinheit 20. Die Feder 20.2 ist einerends gegen den Federbolzen 20.1 abgestützt. Hierzu befindet sich am Federbolzen 20.1 eine Scheibe oder Mutter, gegen den/die sich die Feder 20.2 stützt. Der Federbolzen 20.1 und somit die gesamte Federeinheit 20 ist an diesem Ende freikragend. Andererends stützt sich die Feder gegen das Gehäuse 14, hier gegen das Gehäusegleitelement 14.2.

Insbesondere Fig. 7 bis 10 verdeutlichen, dass das Bodenbearbeitungsgerät 1 eine untere Begrenzung 17.5, ausgebildet als Anschlag, aufweisen kann, um das Verschwenken um die erste Schwenkachse19 bei einer Bewegung der Scheibe nach vorne zu begrenzen. Die untere Begrenzung 17.5 befindet sich am Halterungsgleitelement 17.1 und ist so angeordnet, dass das Gehäuse 14 daran anschlägt. Dabei ermöglicht die untere Begrenzung 17.5 im gezeigten Beispiel ein Verschwenken aus der Neutralstellung um ca. 10°.

Ferner kann das Bodenbearbeitungsgerät 1 zwei seitliche Begrenzung 17.6, ausgebildet als Anschlag, umfassen, um das Verschwenken um die zweite Schwenkachse 19.1 bei einer Bewegung der Scheibe nach links oder rechts zu begrenzen. Die seitlichen Begrenzung 17.6 befinden sich am Halterungsgleitelement 17.1 und sind so angeordnet, dass das Gehäuse 14 daran anschlägt. Im gezeigten Beispiel ermöglichen die seitlichen Begrenzung 17.6 ein Verschwenken aus der Neutralstellung um ca. 8° nach link und 8° nach rechts.

In den folgenden Figuren sind die optionalen seitliche Begrenzungen 17.6 und die optionale untere Begrenzung 17.5 ausgeblendet, um die Schwenkbewegung besser darstellen zu können.

Fig. 11 zeigt ein Verschwenken der Scheibeneinheit 10 um die erste Schwenkachse 19 nach hinten und oben. Dabei wälzt und gleitet die erste konvexe Rundung 14.3 in der ersten konkaven Rundung 17.3. Im Bericht dieser Rundungen bildet sich die erste Schwenkachse 19.

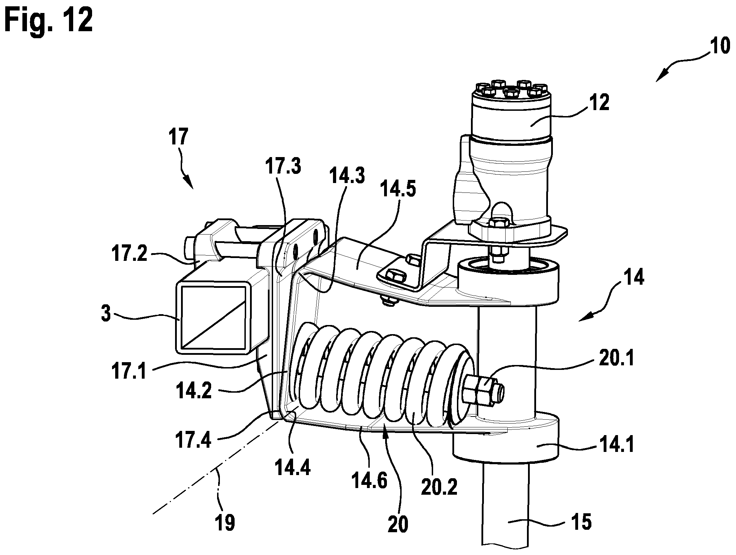

Fig. 12 zeigt ein Verschwenken der Scheibeneinheit 10 um die erste Schwenkachse 19 nach vorne und unten. Dabei wälzt und gleitet die zweite konvexe Rundung 14.4 in der zweiten konkaven Rundung 17.4. Im Bericht dieser Rundungen bildet sich die erste Schwenkachse 19.

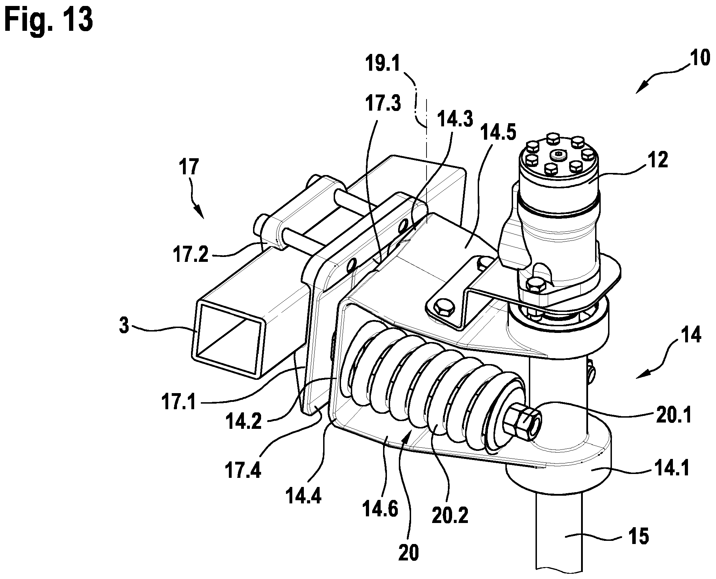

Fig. 13 zeigt ein Verschwenken der Scheibeneinheit 10 um die zweite Schwenkachse 19.1 zur Seite, lediglich durch Abheben des Gehäusegleitelements 14.2 vom Halterungsgleitelement 17.1; ohne konvexer/konkaver Rundungen.

### Bezugszeichenliste

- 1: Bodenbearbeitungsgerät
- 2: Rahmen
- 3: Querträger
- 4: Längsträger
- 5: Zugmaschinenanbindung
- 6: Räder
- 7: Höhenverstellung
- 8: Striegelreihen
- 10: Scheibeneinheiten
- 11: Antriebseinheit
- 12: Motor
- 13: Kupplung
- 14: Gehäuse
- 14.1: Lagerkörper
- 14.2: Gehäusegleitelement
- 14.3: erste konvexe Rundung
- 14.4: zweite konvexe Rundung
- 14.5: erster Schenkel
- 14.6: zweiter Schenkel
- 15: Welle
- 16: Scheibe
- 17: Halterung
- 17.1: Halterungsgleitelement
- 17.2: Gegenstück
- 17.3: erste konkave Rundung
- 17.4: zweite konkave Rundung
- 17.5: untere Begrenzung
- 17.6: seitliche Begrenzungen
- 18: Arm
- 19: erste Schwenkachse
- 19.1: zweite Schwenkachse
- 20: Federeinheit
- 20.1: Federbolzen
- 20.2: Feder
- 21: Verstelleinrichtung
- 30: Fahrtrichtung
- 31: Längsachse
- 32: Querachse
- 33: Hochachse
- 34: Durchmesser
- 35: Abstand
- 36: Überlappung
- 37: Höhe
- α: Anstellwinkel

## Patentansprüche

1. Bodenbearbeitungsgerät (1) umfassend
• einen an einer Zugmaschine befestigbaren Rahmen (2) zum Ziehen entlang einer Fahrtrichtung (30) parallel zu einer horizontalen Längsachse (31), wobei senkrecht zur Längsachse (31) eine horizontale Querachse (32) und eine Hochachse (33) definiert sind, und
• mehrere am Rahmen (2) verteilt angeordnete Scheibeneinheiten (10), wobei jede Scheibeneinheit (10) eine Scheibe (16) umfasst, wobei die jeweilige Scheibe (16) mit einem Anstellwinkel α von 0° bis 15° zur horizontalen Ebene zum Unterschneiden des Bodens angeordnet ist,
wobei die jeweilige Scheibe (16) mit dem Anstellwinkel α in Fahrtrichtung (30) geneigt ist, sodass ein in Fahrtrichtung (30) vorne liegender Bereich der Scheibe (16) tiefer liegt als ein in Fahrtrichtung (30) hinten liegender Bereich der Scheibe (16), wobei die Scheiben (16) drehbeweglich antreibbar sind,
**dadurch gekennzeichnet, dass** die jeweilige Scheibeneinheit (10) eine am Rahmen (2) befestigte Antriebseinheit (11) umfasst, wobei in der Antriebseinheit (11) eine drehbare Welle (15) gelagert ist, und wobei am unteren Ende der Welle (15) die Scheibe (16) angeordnet ist.

2. Bodenbearbeitungsgerät nach Anspruch 1, wobei der Anstellwinkel α zumindest 3°, vorzugsweise zumindest 4°, beträgt; und/oder wobei der Anstellwinkel α höchstens 12°, vorzugsweise höchsten 10°, beträgt.

3. Bodenbearbeitungsgerät nach einem der vorhergehenden Ansprüche, wobei die Scheiben (16) mehrerer, vorzugsweise aller, Scheibeneinheiten (10) sich bei Betrachtung parallel zur Hochachse (33) nicht überlappen.

4. Bodenbearbeitungsgerät nach einem der vorhergehenden Ansprüche, wobei die Scheiben (16) mehrerer, vorzugsweise aller, Scheibeneinheiten (10) bei Betrachtung parallel zur Längsachse (31) aneinandergrenzen oder sich überlappen.

5. Bodenbearbeitungsgerät nach einem der vorhergehenden Ansprüche, wobei mittels einer Verstelleinrichtung (21) die Drehrichtung der Scheiben (16) veränderbar ist.

6. Bodenbearbeitungsgerät nach einem der vorhergehenden Ansprüche, wobei die Antriebseinheit (11) einen Motor (12), insbesondere Druckmittelmotor, zum drehbeweglichen Antreiben der Welle (15) umfasst.

7. Bodenbearbeitungsgerät nach einem der vorhergehenden Ansprüche, wobei die Antriebseinheit (11) um eine mit bis zu +/- 20° parallel zur Querachse (32) liegende Schwenkachse (19) und/oder um eine mit bis +/- 35° parallel zu Hochachse (33) liegende zweite Schwenkachse (19.1) schwenkbar am Rahmen (2) befestigt ist.

8. Bodenbearbeitungsgerät nach einem der vorhergehenden Ansprüche, wobei zwischen der Antriebseinheit (11) und dem Rahmen (2) zumindest eine Federeinheit (20), vorzugsweise mit Spiraldruckfeder, angeordnet ist.

9. Bodenbearbeitungsgerät nach Anspruch 7 und 8, wobei die Antriebseinheit (11) samt Welle (15) und Scheibe (16) entgegen der Federkraft der zumindest einen Federeinheit (20) um die erste Schwenkachse (19) und/oder zweite Schwenkachse (19.1) schwenkbar ist.

10. Bodenbearbeitungsgerät nach einem der vorhergehenden Ansprüche, wobei die Antriebseinheit (11) ein Gehäuse (14) mit einem, insbesondere plattenförmigen, Gehäusegleitelement (14.2) umfasst, wobei am Rahmen (2) eine Halterung (17) mit einem, insbesondere plattenförmigen, Halterungsgleitelement (17.1) angeordnet ist, wobei das Gehäusegleitelement (14.2) auf dem Halterungsgleitelement (17.1) aufliegt.

11. Bodenbearbeitungsgerät nach Anspruch 10, wobei das Gehäusegleitelement (14.2) und das Halterungsgleitelement (17.1) lediglich über die zumindest eine Federeinheit (20) aneinander befestigt sind, sodass das Gehäusegleitelement (14.2) für eine Schwenkbewegung stellenweise entgegen der Federkraft vom Halterungsgleitelement (17.1) abhebbar ist.

12. Bodenbearbeitungsgerät nach Anspruch 10 oder 11, wobei das Gehäusegleitelement (14.2) mit zumindest einer konvexen Rundung (14.3, 14.4) an zumindest einer konkaven Rundung (17.3, 17.4) des Halterungsgleitelements (17.1) bei der Schwenkbewegung geführt ist.

13. Bodenbearbeitungsgerät nach einem der Ansprüche 10 bis 12, wobei die Federeinheit (20) einen Federbolzen (20.1) umfasst, der durch die Halterung (17) und durch das Gehäuse (14) ragt, wobei eine Feder (20.2) auf dem Federbolzen (20.1) sitzt; insbesondere wobei die Feder (20.2) einerends gegen den Federbolzen (20.1) abgestützt ist und andererends entweder gegen das Gehäuse (14) oder gegen die Halterung (17) abgestützt ist.

## Claims

1. Soil cultivation device (1) comprising
• a frame (2), which can be fastened to a tractor, for pulling along a direction of travel (30) parallel to a horizontal longitudinal axis (31), wherein a horizontal transverse axis (32) and a vertical axis (33) are defined perpendicularly to the longitudinal axis (31), and
• a plurality of disc units (10) arranged distributed on the frame (2), wherein each disc unit (10) comprises a disc (16), wherein the respective disc (16) is arranged with a setting angle α of 0° to 15° to the horizontal plane for undercutting the soil,
wherein the respective disc (16) is inclined with the setting angle α in the direction of travel (30), so that a region of the disc (16) located at the front in the direction of travel (30) is located lower than a region of the disc (16) located at the rear in the direction of travel (30), wherein the discs (16) can be driven in a rotationally movable manner,
**characterised in that** the respective disc unit (10) comprises a drive unit (11) fastened to the frame (2), wherein a rotatable shaft (15) is mounted in the drive unit (11), and wherein the disc (16) is arranged at the lower end of the shaft (15).

2. Soil cultivation device according to claim 1, wherein the setting angle α is at least 3°, preferably at least 4°; and/or wherein the setting angle α is at most 12°, preferably at most 10°.

3. Soil cultivation device according to one of the preceding claims, wherein the discs (16) of a plurality of, preferably all, disc units (10) do not overlap when viewed parallel to the vertical axis (33).

4. Soil cultivation device according to one of the preceding claims, wherein the discs (16) of a plurality of, preferably all, disc units (10) adjoin one another or overlap when viewed parallel to the longitudinal axis (31).

5. Soil cultivation device according to one of the preceding claims, wherein the direction of rotation of the discs (16) can be changed by means of an adjusting device (21).

6. Soil cultivation device according to one of the preceding claims, wherein the drive unit (11) comprises a motor (12), in particular a pressure medium motor, for driving the shaft (15) in a rotationally movable manner.

7. Soil cultivation device according to one of the preceding claims, wherein the drive unit (11) is fastened to the frame (2) so as to be pivotable about a pivot axis (19) located at up to +/- 20° parallel to the transverse axis (32) and/or about a second pivot axis (19.1) located at up to +/- 35° parallel to the vertical axis (33).

8. Soil cultivation device according to one of the preceding claims, wherein at least one spring unit (20), preferably with a helical compression spring, is arranged between the drive unit (11) and the frame (2).

9. Soil cultivation device according to claim 7 and 8, wherein the drive unit (11) together with the shaft (15) and the disc (16) is pivotable about the first pivot axis (19) and/or the second pivot axis (19.1) counter to the spring force of the at least one spring unit (20).

10. Soil cultivation device according to one of the preceding claims, wherein the drive unit (11) comprises a housing (14) with a, in particular plate-shaped, housing sliding element (14.2), wherein a holder (17) with a, in particular plate-shaped, holder sliding element (17.1) is arranged on the frame (2), wherein the housing sliding element (14.2) rests on the holder sliding element (17.1).

11. Soil cultivation device according to claim 10, wherein the housing sliding element (14.2) and the holder sliding element (17.1) are fastened to one another only via the at least one spring unit (20), so that the housing sliding element (14.2) can be lifted from the holder sliding element (17.1) in places counter to the spring force for a pivoting movement.

12. Soil cultivation device according to claim 10 or 11, wherein the housing sliding element (14.2) is guided with at least one convex rounding (14.3, 14.4) on at least one concave rounding (17.3, 17.4) of the holder sliding element (17.1) during the pivoting movement.

13. Soil cultivation device according to one of claims 10 to 12, wherein the spring unit (20) comprises a spring bolt (20.1) which projects through the holder (17) and through the housing (14), wherein a spring (20.2) is seated on the spring bolt (20.1); in particular wherein the spring (20.2) is supported at one end against the spring bolt (20.1) and at the other end either against the housing (14) or against the holder (17).

## Revendications

1. Appareil de traitement du sol (1) comprenant
• un cadre (2) pouvant être fixé à une machine de traction pour tirer le long d'une direction de déplacement (30) parallèlement à un axe longitudinal horizontal (31), un axe transversal horizontal (32) et un axe vertical (33) étant définis perpendiculairement à l'axe longitudinal (31), et
• plusieurs unités de disque (10) disposées de manière répartie sur le cadre (2), chaque unité de disque (10) comprenant un disque (16), le disque respectif (16) étant disposé avec un angle d'attaque α de 0° à 15° par rapport au plan horizontal pour couper le sol par le dessous,
le disque respectif (16) étant incliné avec l'angle d'attaque α dans la direction de déplacement (30) de sorte qu'une région du disque (16) située à l'avant dans la direction de déplacement (30) se trouve plus bas qu'une région du disque (16) située à l'arrière dans la direction de déplacement (30), les disques (16) pouvant être entraînés de manière mobile en rotation,
**caractérisé en ce que** l'unité de disque respective (10) comprend une unité d'entraînement (11) fixée au cadre (2), un arbre rotatif (15) étant monté dans l'unité d'entraînement (11), et le disque (16) étant disposé à l'extrémité inférieure de l'arbre (15).

2. Appareil de traitement du sol selon la revendication 1, l'angle d'attaque α étant d'au moins 3°, de préférence d'au moins 4° ; et/ou l'angle d'attaque α étant d'au plus 12°, de préférence d'au plus 10°.

3. Appareil de traitement du sol selon l'une quelconque des revendications précédentes, les disques (16) de plusieurs, de préférence de toutes les unités de disque (10) ne se chevauchant pas lorsqu'ils sont observés parallèlement à l'axe vertical (33).

4. Appareil de traitement du sol selon l'une quelconque des revendications précédentes, les disques (16) de plusieurs, de préférence de toutes les unités de disque (10) étant adjacents ou se chevauchant lorsqu'ils sont observés parallèlement à l'axe longitudinal (31).

5. Appareil de traitement du sol selon l'une quelconque des revendications précédentes, le sens de rotation des disques (16) pouvant être modifié au moyen d'un dispositif de réglage (21).

6. Appareil de traitement du sol selon l'une quelconque des revendications précédentes, l'unité d'entraînement (11) comprenant un moteur (12), en particulier un moteur à fluide sous pression, pour l'entraînement mobile en rotation de l'arbre (15).

7. Appareil de traitement du sol selon l'une quelconque des revendications précédentes, l'unité d'entraînement (11) étant fixée au cadre (2) de manière à pouvoir pivoter autour d'un axe de pivotement (19) situé jusqu'à +/- 20° parallèlement à l'axe transversal (32) et/ou autour d'un deuxième axe de pivotement (19.1) situé jusqu'à +/- 35° parallèlement à l'axe vertical (33).

8. Appareil de traitement du sol selon l'une quelconque des revendications précédentes, au moins une unité de ressort (20), de préférence avec un ressort de compression en spirale, étant disposée entre l'unité d'entraînement (11) et le cadre (2).

9. Appareil de traitement du sol selon les revendications 7 et 8, l'unité d'entraînement (11) avec l'arbre (15) et le disque (16) pouvant pivoter autour du premier axe de pivotement (19) et/ou du deuxième axe de pivotement (19.1) à l'encontre de la force de ressort de l'au moins une unité de ressort (20).

10. Appareil de traitement du sol selon l'une quelconque des revendications précédentes, l'unité d'entraînement (11) comprenant un boîtier (14) avec un élément coulissant de boîtier (14.2), en particulier en forme de plaque, un support (17) avec un élément coulissant de support (17.1), en particulier en forme de plaque, étant disposé sur le cadre (2), l'élément coulissant de boîtier (14.2) reposant sur l'élément coulissant de support (17.1).

11. Appareil de traitement du sol selon la revendication 10, l'élément coulissant de boîtier (14.2) et l'élément coulissant de support (17.1) étant fixés l'un à l'autre uniquement par le biais de l'au moins une unité de ressort (20) de sorte que l'élément coulissant de boîtier (14.2) puisse être soulevé par endroits de l'élément coulissant de support (17.1) à l'encontre de la force de ressort pour un mouvement de pivotement.

12. Appareil de traitement du sol selon la revendication 10 ou 11, l'élément coulissant de boîtier (14.2) étant guidé avec au moins un arrondi convexe (14.3, 14.4) sur au moins un arrondi concave (17.3, 17.4) de l'élément coulissant de support (17.1) lors du mouvement de pivotement.

13. Appareil de traitement du sol selon l'une quelconque des revendications 10 à 12, l'unité de ressort (20) comprenant un boulon de ressort (20.1) qui fait saillie à travers le support (17) et à travers le boîtier (14), un ressort (20.2) reposant sur le boulon de ressort (20.1) ; en particulier le ressort (20.2) étant supporté d'une part contre le boulon de ressort (20.1) et d'autre part soit contre le boîtier (14) soit contre le support (17).
